# EUROPEAN PATENT APPLICATION

(11) **EP 3 470 781 A1**
(43) Date of publication of application: **17.04.2019**
(21) Application number: 18199200.9
(22) Date of filing: 08.10.2018
(51) Int. Cl.: G01C 5/00, G01C 5/06, G01C 23/00, G01C 21/20

(54) **SYSTEM AND METHOD FOR DEVELOPING AND MAINTAINING TEMPERATURE-COMPENSATED ALTITUDE INFORMATION**

(30) Priority: 10.10.2017 US 201715729562
(71) Applicant: Honeywell International Inc., Morris Plains, NJ New Jersey 07950 (US)
(72) Inventor: KRISHNA, Kiran Gopala, Morris Plains, NJ New Jersey 07950 (US); JAYATHIRTHA, Srihari, Morris Plains, NJ New Jersey 07950 (US); SETHURAMAN, Deepthi, Morris Plains, NJ New Jersey 07950 (US)
(74) Representative: Houghton, Mark Phillip

(57) **Abstract**

A system and method for developing and maintaining temperature-compensated altitude information are disclosed. One method includes receiving a message including an outside air temperature value for a prospective geographic position of a vehicle, and an altitude value and a barometric corrected altitude value for a current geographic position of the vehicle. The method determines if the outside air temperature value for the prospective geographic position of the vehicle is not equal to a current outside air temperature value, and updates the outside air temperature value for the prospective geographic position of the vehicle with the current outside air temperature value if the outside air temperature value for the prospective geographic position of the vehicle is not equal to the current outside air temperature value.

## Description

### BACKGROUND

An inversion is a deviation from the normal change of an atmospheric property with altitude. For example, a "temperature inversion" is an increase in temperature with height. Similarly, a "temperature inversion layer" is an atmospheric layer within which such an increase in temperature occurs. In order to provide a common reference for atmospheric temperature, pressure, density and viscosity changes with altitude, the International Standard Atmosphere (ISA) model was established with tables of values for these atmospheric properties over a wide range of altitudes. The ISA values are utilized to standardize the calibration of flight instrumentation in aircraft and guidance systems in other flight vehicles such as rockets and the like.

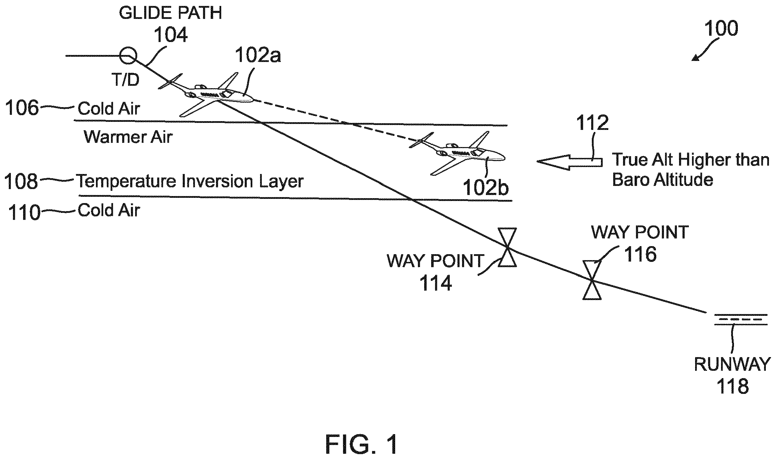

FIG. 1 is a diagram 100 depicting how an aircraft's true altitude can differ from its barometric altitude and indicated altimeter (reading) when the aircraft encounters a temperature inversion layer. Referring to the exemplary diagram 100 depicted in FIG. 1, an aircraft 102a is depicted beginning its descent on a predetermined glide path 104. The pilot will attempt to control the descent so that the aircraft 102a will follow the glide path 104 via the waypoints 114, 116 and touch down or land on the runway 118. At the initial altitude shown in this example, the aircraft 102a begins its descent within a non-inverted layer 106 of cold air. Notably, for this example, while the aircraft 102a is descending through the layer of cold air 106, the pilot is able to keep the aircraft 102a on the glide path 104 by monitoring the altimeter reading, because the true altitude of the aircraft 102a is the same as its barometric altitude and the altimeter reading is correct. However, at a lower altitude, the aircraft (now labeled 102b) is shown descending through the warmer air of a temperature inversion layer 108. Consequently, the pilot is now unable to keep the aircraft 102b on the glide slope 104, because the warmer air in the temperature inversion layer 108 causes the barometric altitude or altimeter reading in the aircraft 102b to be significantly lower than the aircraft's true altitude. In other words, at the altitude indicated by the arrow 112, as the aircraft 102b passes through the warmer air of the temperature inversion layer 108, the true altitude of the aircraft 102b is significantly higher than its barometric altitude and thus the altimeter reading. Therefore, unless the pilot is able to recognize and compensate for the difference between the aircraft's true altitude and indicated altitude, the aircraft 102b will remain at a higher altitude than that defined by the glide path 104.

Conversely, but more importantly from a flight safety standpoint, if the temperature of the atmosphere at a particular altitude is lower (colder) than the ISA temperature for that altitude, then the true altitude of an aircraft operating at that altitude is lower than the aircraft's indicated barometric altitude. Consequently, whenever aircraft operate under such conditions where the temperature in the atmosphere is colder than the ISA temperature, flight safety becomes a major concern. For example, if a flight crew fails to recognize that an aircraft's true altitude is lower than its indicated altitude, then the crew will likely fail to maintain an adequate amount of clearance between the aircraft and the terrain or obstacles above the terrain. Notably, these atmospheric conditions can be especially dangerous if an aircraft is on an approach leg or flying close to the ground. For example, during a final approach, if an aircraft's altimeter setting is incorrect (e.g., pressure setting of 30.22 inches of Hg at zero altitude instead of the standard pressure setting of 29.22 inches of Hg), the aircraft's true altitude can be significantly lower than its indicated altitude (e.g., approximately 1,000 feet below the altimeter reading).

Currently, regional altitude settings to be utilized by flight crews are broadcast from external sources such as airports and governmental or commercial weather services. However, flight crews typically consider such regional altitude settings as unreliable and inaccurate, because the broadcast altitude settings (e.g., "Barometric Corrected Altitude") are regional and thus fail to account for local variations in atmospheric conditions, such as variations in temperature and pressure that can occur within the regions and at the altitudes involved. Consequently, flight crews typically utilize onboard instruments to monitor local temperatures and pressures and adjust the indicated altitude settings if needed. However, this approach requires a substantial amount of direct crew involvement, and consequently, is subject to human error given the multitude of other flight-related tasks the crews must complete.

Notably, in this regard, the Aviation Safety Reporting System (ASRS) is the Federal Aviation Administration's (FAA's) voluntary, confidential reporting system that allows pilots and other aircraft crew members to confidentially report safety events, such as near misses and close calls, in the interest of improving air safety. The Aviation Safety Reports (ASR's) published by the ASRS are replete with reported safety events caused by announced, regional altitude settings that were incorrect. For example, the abbreviation "QNH" (Query: Nautical Height) is an altimeter sub-scale setting indicating the regional atmospheric pressure at sea level ("zero altitude") that applies away from an airfield. Also, the abbreviation "QFE" (Query: Field Elevation) refers to the altimeter sub-scale setting that indicates altitude relative to a particular airfield and causes an aircraft's altimeter to read "zero" upon landing. As such, if an announced QNH or QFE setting is incorrect, the recipient aircraft's altimeter reading will be different from the aircraft's true altitude, and a significant safety event can occur as a result. For example, Air Traffic Control Centers typically broadcast the QNH value to aircraft before clearing them to descend below the transition level in order to land, if the pilots request the QNH value or the QNH value changes. In this regard, a prominent air safety investigation reports that pressure altimeter setting errors (e.g., erroneous QNH or QFE settings) are especially subject to human error while an aircraft is on the glide path during the landing approach.

As indicated above, existing meteorological reporting networks and other weather reporting services are often unreliable and can broadcast erroneous atmospheric pressure settings, such as incorrect QNH or QFE settings. Furthermore, the absence of meteorological reporting networks or pressure sensing and reporting stations in remote locations makes it more difficult, if not impossible, for flight crews to obtain accurate pressure settings such as QNH or QFE. Moreover, no procedure currently exists that enables a flight crew to detect an erroneous QNH or QFE setting when it is received. Typically, flight crews have to obtain a precise altitude fix before they can compare the altimeter reading with the known altitude. Procedurally, flight crews verify their altimeter settings for accuracy prior to takeoff. Typically, flight crews utilize weather information received from the Automatic Terminal Information Service (ATIS), the Air Traffic Control (ATC) Service, or other available source of weather information (e.g., local or regional, commercial weather broadcasts) to manually correct the barometric altimeter settings in their aircraft prior to takeoff. This is a standard procedure followed by flight crews when their aircraft is below or passing through a transition altitude. Subsequently, during an aircraft's descent, the flight crew utilizes a checklist to verify that the altitude settings (e.g., QNH and QFE) are correct as the aircraft passes through the transition altitude level. The crew also performs checks and cross-checks to ensure that the aircraft's two altimeters read within allowable tolerances. However, these checks and cross-checks can still fail to detect incorrect altitude settings (e.g., QNH and/or QFE) due, for example, to pilot input error or incorrect altitude settings received from the ground. Notably, the ability of a crew to identify and compensate for an incorrect altitude setting is particularly important when an aircraft is on a precision landing approach, such as for example, an Instrument Landing System (ILS) approach.

For non-precision landing approaches, many onboard flight management systems include an integrated, vertical navigation (VNAV) subsystem that provides flight control steering and thrust guidance commands to an aircraft's autopilot, which enables the autopilot to maintain the aircraft's position along the vertical path during the descent and approach phases of the flight. Some less sophisticated VNAV subsystems merely provide the vertical path information to the flight crew during the aircraft's descent. Nevertheless, during any non-precision landing approach, it is critically important (e.g., for flight safety purposes) that the flight crews adhere to the altitude constraints specified in their flight plans. However, the accuracy of the vertical path information the flight crews receive can be unreliable, because the altitude information utilized to determine, for example, the final capture altitudes and flight path angles must be temperature-compensated for any deviation from the ISA temperatures for the altitudes involved. Consequently, the ability of a flight crew to identify and compensate for such an incorrect altitude setting is also particularly important when an aircraft is on a non-precision landing approach.

Existing flight management systems can provide temperature-compensated altitude information. For example, at a waypoint, a flight crew can utilize onboard instrumentation to obtain and enter an "Outside Air Temperature" (OAT) value into the flight management system, and the flight management system will output the temperature-compensated altitude constraint values that can be applied by the crew to the flight plan, in response to the entered OAT value. However, existing flight management systems merely accept the OAT value at one waypoint. Consequently, the single OAT value is utilized by these flight management systems for temperature compensation and to correct all of the remaining altitude constraints (e.g., at other waypoints) until the aircraft's destination is reached. However, since these flight management systems will accept only one OAT value during the aircraft's descent, this one value will not account for the effects of temperature variations (e.g., temperature inversion) in the different atmospheric layers that the aircraft may encounter during the remainder of the flight. Consequently, since these flight management systems apply the same temperature compensation values at all of the waypoints having altitude constraints, the flight crews' workloads are substantially increased by the need to monitor the OAT values as the flight proceeds, and update the temperature compensated altitude information as needed at the remaining waypoints having altitude constraints. Thus, the need exists for a system and method that can be utilized to develop and maintain temperature-compensated altitude information for aircraft during flights.

### SUMMARY

Embodiments of the present invention provide a system and methods that can be utilized to develop and maintain temperature-compensated altitude information for vehicles (e.g., aircraft) before and during flights, and will be understood by reading and studying the following specification.

In one implementation, the disclosure is directed to a method for developing and maintaining temperature-compensated altitude information. The method includes requesting outside air temperature values and barometric correction values for at least two geographic, three-dimensional locations that are prospective waypoints for a vehicle, receiving an outside air temperature value and a barometric correction value for at least one geographic, three-dimensional location of the at least two geographic, three-dimensional locations, storing the received outside air temperature value and the received barometric correction value, measuring an outside air temperature value and a barometric correction value for each geographic, three-dimensional location of the at least two geographic, three-dimensional locations, and computing a flight path through the at least two geographic, three-dimensional locations utilizing the received outside air temperature value, the received barometric correction value, the measured outside air temperature value, and the measured barometric correction value.

In a second implementation, the disclosure is directed to a method for developing and maintaining temperature-compensated altitude information. The method includes receiving a message including at least one outside air temperature value for a prospective geographic position of a vehicle and an altitude value and a barometric corrected altitude value for a current geographic position of the vehicle, determining if the at least one outside air temperature value for the prospective geographic position of the vehicle is not equal to a current outside air temperature value for the current geographic position of the vehicle, and updating the at least one outside air temperature value for the prospective geographic position of the vehicle with the current outside air temperature value if the at least one outside air temperature value for the prospective geographic position of the vehicle is not equal to the current outside air temperature value.

In a third implementation, the disclosure is directed to a system for developing and maintaining temperature-compensated altitude information. The system includes a communication network including a plurality of servers, and a plurality of vehicles, wherein each vehicle of the plurality of vehicles includes a transmission module configured to transmit at least one message to the communication network, and a receive module configured to receive at least a second message from the communication network, and the at least one message and the at least a second message includes at least one of a receive record, a query record, or a transmit record.

### DRAWINGS

Embodiments of the present invention can be more easily understood and further advantages and uses thereof more readily apparent, when considered in view of the description of the preferred embodiments and the following figures in which:
FIG. 1 is a diagram depicting how an aircraft's true altitude can differ from its barometric altitude and indicated altimeter reading when the aircraft encounters a temperature inversion layer..
FIG. 2 depicts an example communication system that can be utilized to implement one embodiment of the present invention.
FIGS. 3A and 3B are related diagrams depicting a system that can be utilized to implement one example embodiment of the present invention.
FIG. 4 is a diagram depicting a plurality of exemplary records that can be transmitted to, or received from, a network via the communication system located onboard each of the vehicles depicted in FIGS 3A and 3B..
FIG. 5 is a flow diagram depicting an example method that can be utilized to implement one embodiment of the present invention.
FIG. 6 is a flow diagram depicting a second example method that can be utilized to implement one embodiment of the present invention.
FIG. 7 is a flow diagram depicting a third example method that can be utilized to implement one embodiment of the present invention.
FIG. 8 is a flow diagram depicting a fourth example method that can be utilized to implement one embodiment of the present invention.

### DETAILED DESCRIPTION

In the following detailed description, reference is made to the accompanying drawings that form a part hereof, and in which is shown by way of specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

Embodiments disclosed herein provide systems and methods for developing and maintaining temperature-compensated altitude information for a vehicle during flights. For example, the vehicle can be a fixed wing aircraft, a rotary wing aircraft, an unmanned aerial vehicle (UAV), or any other vehicle capable of flight that follows a flight plan and/or one or more waypoints as a flight path. More precisely, a method and system are provided for continuously monitoring the outside air temperature (OAT) and barometric corrected altitude (e.g., temperature-compensated altitude) information for an airborne vehicle (e.g., an aircraft) during a flight, and determining if the OAT information deviates away from the ISA temperature value for that altitude by more than a predetermined amount. The system automatically receives weather, wind and temperature reports from datalink services or other aircraft in the vicinity (e.g., via a network of servers commonly referred to as the "Cloud"). The method updates the OAT information for waypoints having altitude constraints along the flight path, and continuously refines the OAT information as the flight progresses. Utilizing the most current OAT information for the aircraft, the system detects any temperature inversion layers within the flight path, and the method computes temperature-compensated altitude constraint information for the flight path through the waypoint(s) involved. Thus, the system and method provide a stable descent path profile for the aircraft involved, which can avoid unnecessary or frequent changes to the aircraft's flight plan, and thereby enhance the crew's management of the descent and approach. As such, the crew's workload is significantly reduced and flight safety is significantly enhanced.

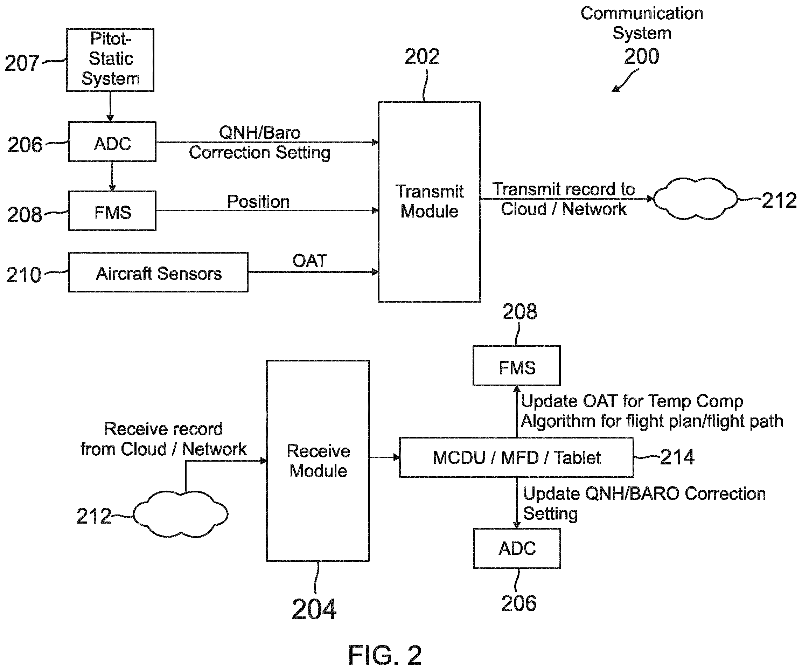

FIG. 2 depicts an example communication system 200, which can be utilized to implement one embodiment of the present invention. For the embodiment shown in FIG. 2, the communication system 200 can be implemented as an individual electronic component onboard a vehicle, such as, for example, an aircraft. In a different aspect of the embodiment shown in FIG. 2, the communication system 200 can be integrated with other electronic components (e.g., an avionics and/or navigation system) onboard the vehicle involved. In a second embodiment, the communication system 200 can be integrated with navigation and/or guidance equipment within a different type of vehicle, such as, for example, a UAV, a helicopter, or a rocket-propelled spacecraft and the like. In any event, referring to the example embodiment depicted in FIG. 2, the communication system 200 includes a transmit module 202 and a receive module 204. One output of an air data computer (ADC) 206 is coupled to a first input of the transmit module 202, and a second output of the ADC 206 is coupled to an input of a flight management system (FMS) 208. The output of the FMS 208 is coupled to a second input of the transmit module 202. One output of aircraft sensors 210 (e.g., onboard temperature sensors) is coupled to a third input of the transmit module 202. For this exemplary embodiment, the ADC 206 functions primarily to determine a vehicle's (e.g., aircraft's) airspeed and altitude data from an onboard pitot-static system 207, and generate barometric corrected altitude (e.g., temperature-compensated altitude) data to be utilized for the vehicle (e.g., aircraft) involved. The ADC 206 conveys the altitude (e.g., QNH) data and barometric corrected altitude data to the transmit module 202 and the FMS 208. In response, the FMS 208 calculates the vehicle's three-dimensional position data (e.g., latitude, longitude and altitude) and conveys that position data to the transmit module 202. A system of temperature sensors 210 onboard the vehicle senses the current OAT and conveys that information to the transmit module 202. Utilizing a suitable (e.g., avionics) transmitter and transmission communication protocol, the transmit module 202 transmits one or more messages with data records including, for example, the vehicle's current three-dimensional position (e.g., latitude, longitude, altitude), current QNH and barometric corrected altitude settings, and OAT information to a network of servers 212. For example, the network 212 can be a communication and/or data network that includes one or more air traffic control (ATCs), air route traffic control centers (ARTCCs), European route traffic control centers (ERTCCs), and/or the network of servers commonly referred to as the "Cloud." As such, a vehicle (e.g., aircraft) can utilize the transmit module 202 to transmit queries to the network 212 in order to obtain the most current QNH information, barometric corrected altitude information, and OAT information for the vehicle's current three-dimensional position (as well as for additional locations further along the vehicle's projected path).

The output of the receive module 204 is coupled to the input of an onboard visual display 214, such as, for example, a multi-functional control display (MCDU), a multi-functional display (MFD), a primary flight display (PFD), or the display of a tablet or computer and the like. In some embodiments, the output of the receive module 204 can include display symbology representing, for example, downpath waypoints, which can be displayed on an FMS page (208). For example, this process can be automated or crew initiated. In response to a query or similar message transmitted by the transmit module 202, the network 212 can convey, for example, on an uplink to the receive module 204, one or more messages including data records indicating, for example, the most current QNH settings, barometric corrected altitude settings, and/or OAT information for the vehicle's (three-dimensional) position, and also other locations of interest further along the path (e.g., flight path or flight plan) of the vehicle as it proceeds. Consequently, a crew member can view the received data shown on the display 214, and input the received data (e.g., to the FMS 208 and/or the ADC 206) as updates to the most current QNH setting information, barometric corrected altitude setting information, and OAT information. For this exemplary embodiment, the updated OAT information is conveyed to the FMS 208, which inputs the updated OAT value as a parameter in an altitude temperature compensation algorithm (to be described in detail below). The updated QNH and barometric corrected altitude settings are conveyed to the ADC 206.

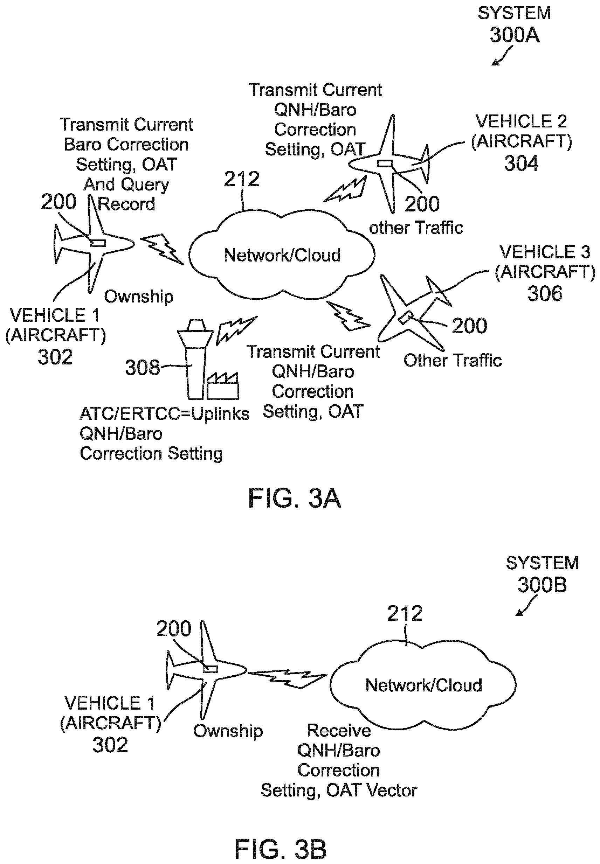

FIGS. 3A and 3B are related diagrams depicting a system 300A and 300B, which can be utilized to implement one example embodiment of the present invention. Referring to FIG. 3A, the system 300A includes a plurality of vehicles 302, 304, 306 (e.g., aircraft), and at least one communication and/or control facility (e.g., ATC, ARTCC, ERTCC) 308 located on the ground. Each vehicle 302, 304, 306 has an onboard communication system such as, for example, the communication system 200 described above with respect to FIG. 2. Consequently, the communication system 200 located onboard each vehicle 302, 304, 306 includes the transmit module 202 and the receive module 204 shown in FIG. 2. As such, the communication system 200 onboard each vehicle 302, 304, 306 enables each vehicle to transmit messages to the network 212 including, for example, one or more transmit records and/or query records. Also, as depicted in FIG. 3B, the communication system 200 located onboard each vehicle 302, 304, 306 enables each vehicle to receive messages from the network 212 including, for example, one or more receive records. For this example embodiment, the communication and/or control facility 308 can transmit regional meteorological information (e.g., QNH settings, barometric corrected altitude settings, OAT vectors and the like) to the network 308.

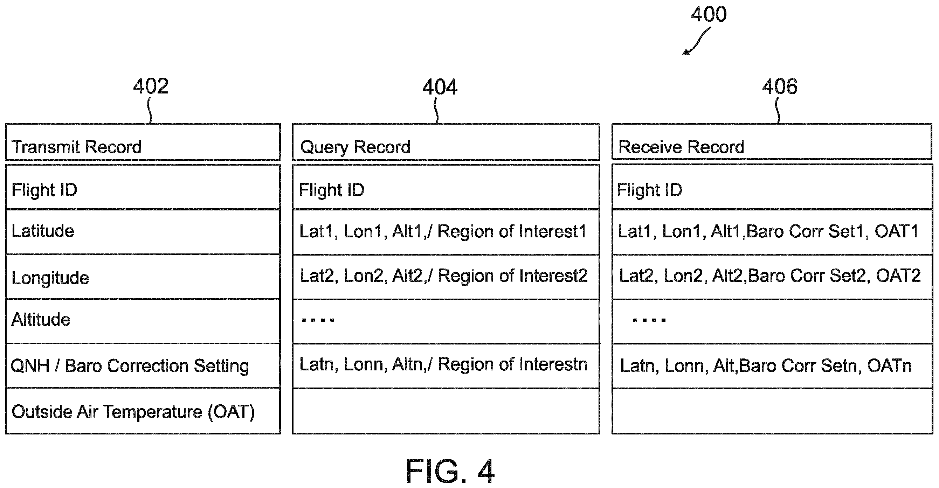

FIG. 4 is a diagram 400 depicting a plurality of exemplary records that can be transmitted to, or received from, the network 212 via the communication system 200 located onboard each of the vehicles 302, 304, 306 shown in the embodiment depicted in FIGS. 3A and 3B. Referring to FIG. 4, an example transmit record 402 is shown that includes the vehicle's identification (e.g., flight ID), the vehicle's current latitude, longitude and altitude (e.g., three-dimensional position), the vehicle's current QNH setting and barometric corrected altitude setting, and the vehicle's current OAT value. The example query record 404 shown includes the vehicle's ID, and the latitudes, longitudes and altitudes (e.g., three-dimensional positions of the vehicle) for a plurality of locations (e.g., waypoints) or other locations or regions of interest further along the vehicle's planned (flight) path. Notably, the query records can be transmitted when requested, or transmitted periodically so the vehicle's operators (e.g., flight crew) can obtain more frequent position updates from the network 212 for the locations or regions of interest involved.

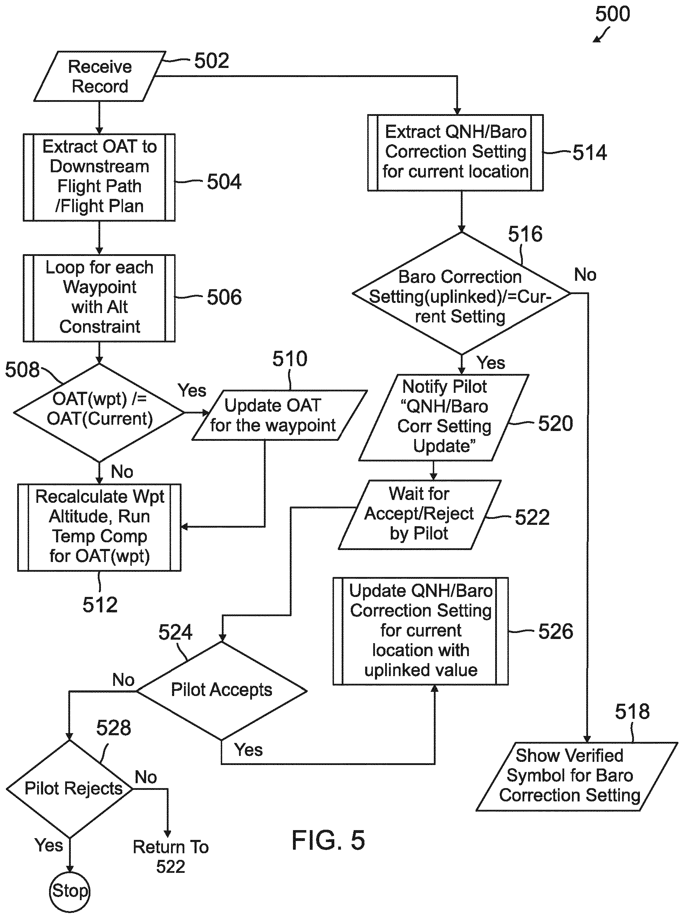

FIG. 5 is a flow diagram depicting an exemplary method 500, which can be utilized to implement one embodiment of the present invention. For example, the method 500 can be utilized by an aircraft (e.g., vehicle 302, 304, 306) to compute one or more temperature-compensated altitude settings for a flight path through one or more prospective waypoints having altitude constraints. As such, referring to the flow diagram shown in FIG. 5, the exemplary method 500 begins with an aircraft receiving (e.g., from the network 212 via the communication system 200) a message including a receive record such as, for example, the receive record 406 shown in FIG. 4 (502). A suitable computer onboard the aircraft (e.g., within the FMS 208) extracts (e.g., from the receive record) the OAT values for all of the prospective waypoints in the aircraft's flight path or flight plan (504). Next, the computer performs a suitable "loop" computation to determine if the current OAT value for each prospective waypoint (e.g., having an altitude constraint) should be updated (506). For this example embodiment, the FMS determines if the extracted OAT value for each prospective waypoint having an altitude constraint is not equal to the waypoint's current OAT value (508). If the extracted OAT value for that waypoint is not equal to the current OAT value for that waypoint, the FMS updates the waypoint's current OAT value with the extracted OAT value (510). On the other hand, if (508) the extracted OAT value is equal to the current OAT value for a prospective waypoint, the FMS recalculates the temperature-compensated altitude setting for that prospective waypoint, by running a suitable temperature compensation program (512), as described below. Also, if the OAT value for a prospective waypoint is updated (510), the FMS recalculates the temperature-compensated altitude setting for that prospective waypoint, by running the temperature compensation program (512).

Furthermore, when the message including the receive record is received (502), the FMS also extracts the QNH and barometric corrected altitude (temperature-compensated altitude) settings for the aircraft's current location (514). The FMS then determines if the uplinked barometric corrected altitude setting is not equal to the current barometric corrected altitude setting at the aircraft's current location (516). If the uplinked barometric corrected altitude setting is equal to the current barometric corrected altitude setting, the FMS provides a visual indication (e.g., "verify" symbol) on a display (e.g., 214 in FIG. 2) that the uplinked barometric corrected altitude setting is equal to the current barometric corrected altitude setting (518). However, if (516) the FMS determines that the uplinked barometric corrected altitude setting is not equal to the barometric corrected altitude setting for the aircraft's current location, the FMS outputs a visual indication to the display that notifies the pilot that an update to the current QNH setting and/or barometric corrected altitude setting is available (520), and the FMS then waits until the pilot (or crew member) either accepts or rejects the available QNH setting update and/or barometric corrected altitude update (522). If the pilot (or crew member) accepts the available QNH setting update and/or the available barometric corrected altitude setting update (524), the FMS updates the QNH setting and/or the barometric corrected altitude setting for the aircraft's current location with the available QNH setting and/or barometric corrected altitude setting updates (526). However, if (524) the pilot (or crew member) does not accept the available QNH setting update and/or the barometric corrected altitude setting update, the FMS determines if the pilot (or crew member) rejects the available QNH setting update and/or the barometric corrected altitude setting update (528). If the pilot (or crew member) does not reject the available QNH setting update and/or the barometric corrected altitude setting update, the flow returns to block 522. However, if (528) the pilot (or crew member) rejects the available QNH setting update and/or the barometric corrected altitude setting update, the flow is terminated.

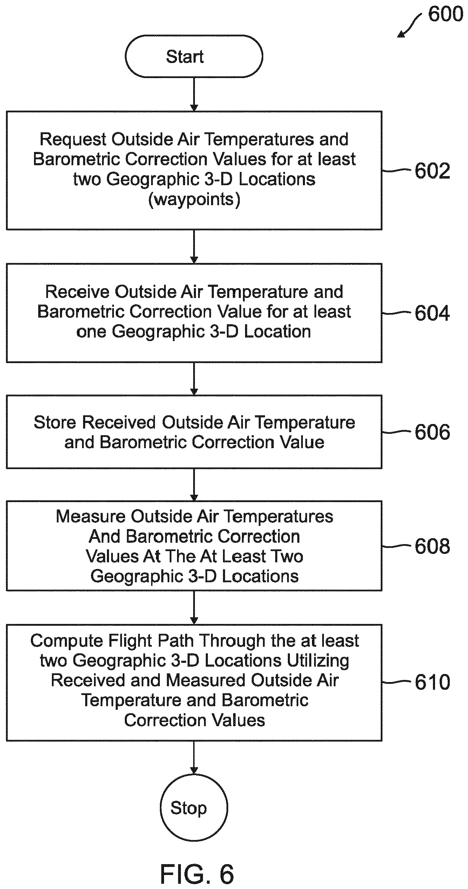

FIG. 6 is a flow diagram depicting an example method 600, which can be utilized to implement one embodiment of the present invention. For example, the method 600 can be utilized by an FMS onboard an aircraft (e.g., vehicle 302, 304, 306 depicted in FIG. 3) to compute a flight path through a plurality of prospective waypoints having, for example, altitude constraints. Referring to FIG. 6 and the exemplary system 300A, 300B depicted in FIGS. 3A and 3B, a vehicle (e.g., aircraft) 302, 304 or 306 can transmit a message to the network 212, for example, that requests an OAT value and a barometric corrected altitude (e.g., temperature-compensated altitude) value for at least two geographic, three-dimensional locations (e.g., latitudes, longitudes, altitudes) that are prospective waypoints for the vehicle (602). For example, the transmitted message can include a query record such as the query record 404 depicted in FIG. 4. In response to the transmitted message, the vehicle can receive a message, for example, from the network 212 including an OAT value and barometric corrected altitude (e.g., temperature-compensated altitude) value for at least one of the requested geographic, three-dimensional locations (604). For example, the received message can include a receive record such as the receive record 406 depicted in FIG. 4. The vehicle then stores the received OAT and barometric corrected value in, for example, the FMS (606). As it proceeds along the flight path, the vehicle (e.g., utilizing suitable onboard sensors) measures the OATs and barometric corrected altitude (e.g., temperature-compensated altitude) values at each one of the at least two geographic, three-dimensional locations or altitude constrained waypoints (608). Utilizing the received and measured outside air temperatures and barometric corrected altitude (e.g., temperature-compensated altitude) values, the vehicle's FMS computes a flight path through the at least two geographic, three-dimensional locations or waypoints (610). For example, an aircraft's FMS can utilize the received and measured outside air temperatures and barometric corrected altitude values to calculate the amount of clearance required between the aircraft and each prospective waypoint with altitude constraints, and compute a flight path for the aircraft that will maintain the requisite clearance as the aircraft passes through each prospective waypoint.

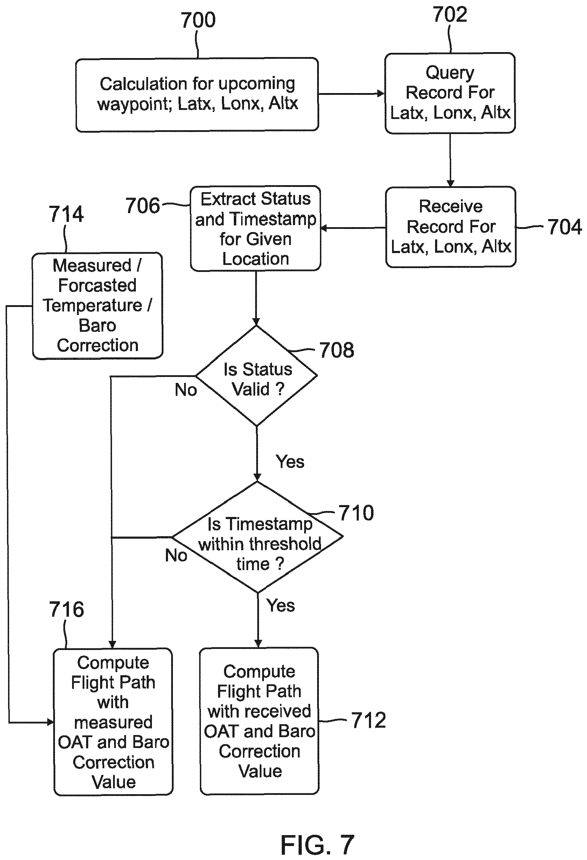

FIG. 7 is a flow diagram depicting an example method 700, which can be utilized to implement one embodiment of the present invention. For example, the method 700 can be utilized by an FMS onboard an aircraft (e.g., vehicle 302, 304, 306 depicted in FIG. 3) to compute a temperature-compensated altitude setting for a prospective, upcoming location of interest further along the flight path (e.g., a waypoint with an altitude constraint). Referring to FIG. 7, the aircraft transmits a query record 404 (e.g., to the network 212) including a request to obtain the OAT value and barometric corrected altitude (e.g., temperature-compensated altitude) value for the upcoming location of interest or waypoint (702). In response, the aircraft receives (e.g., from the network 212) a message including a receive record 406 for the location of interest (704). Notably, in addition to the requested information, each receive record 406 includes a status field and a timestamp field with information indicating the status (e.g., validity) and timeliness (e.g., freshness) of the data within the receive record for that location of interest or waypoint. As such, the aircraft's FMS extracts the status and timestamp information from the receive record 406 for the location of interest (706). Notably, for the exemplary method depicted in FIG. 7, the network 212 can set the status bits to "valid" in the receive record 406 if two or more other aircraft flying within the vicinity of the location of interest (e.g., waypoint) can measure the OAT and the barometric corrected altitude setting at that location and verify that substantially identical OAT and barometric altitude information has been received from the network 212. The timestamp data in the receive record indicates the last time the above-described validation method was performed by the FMS in any one of the other aircraft involved.

Returning to FIG. 7, the FMS onboard the requesting aircraft also determines if the status bits in the receive record are set to "valid" (708), and if so, the FMS also determines if the timestamp information falls within a predefined time threshold (710). If so, the FMS computes the flight path through that upcoming waypoint (or location of interest) with the OAT and barometric corrected altitude (temperature-compensated altitude) information received from the network 212 (712). In the meantime, the aircraft's FMS also measures or otherwise obtains (e.g., from a local meteorological forecast) OAT and barometric corrected altitude information in the vicinity of the upcoming location (waypoint) of interest (714), and if the status bits in the receive record are not set to "valid" (708), or the timestamp value is not with the predefined time threshold (710), the FMS computes the flight path through that upcoming location (waypoint) of interest utilizing the measured OAT and barometric corrected altitude (temperature-compensated altitude) value (716).

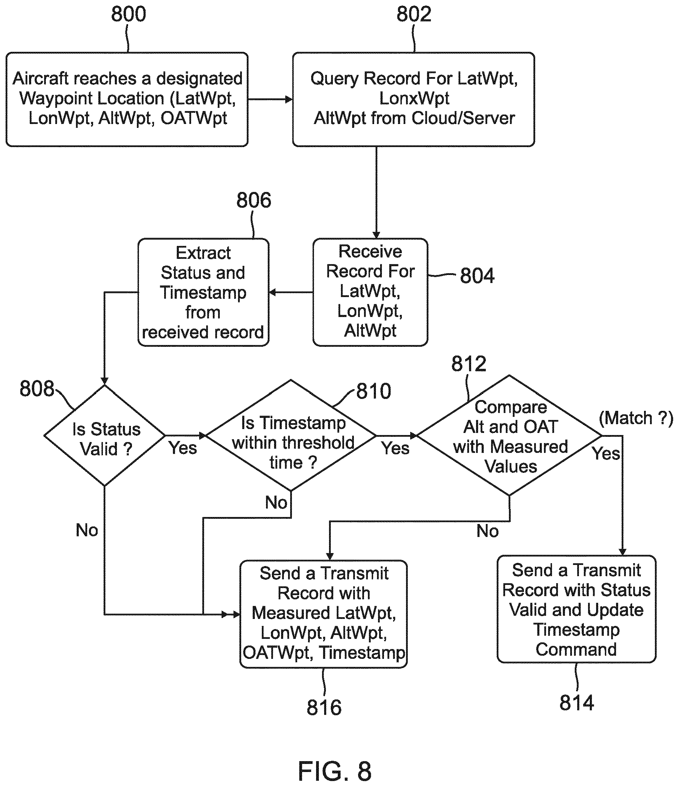

FIG. 8 is a flow diagram depicting an example method 800, which can be utilized to implement one embodiment of the present invention. For example, the method 800 can be utilized by an FMS onboard an aircraft (e.g., vehicle 302, 304, 306 depicted in FIG. 3) to update the status and timestamp data for the network 212 as the aircraft reaches a designated location (e.g., waypoint). Referring to FIG. 8, the aircraft transmits a message to the network 212. The message includes a query record (e.g., 404 in FIG. 4) requesting the latitude, longitude and altitude of the designated waypoint (802). In response, the network 212 transmits a message to the aircraft. The message includes a receive record (e.g., 406) for the latitude, longitude and altitude of the designated waypoint (804). The FMS onboard the aircraft extracts the status and timestamp information from the receive record (806). The FMS determines if the status bits in the status field in the receive record are set to "valid" (808), and if so, the FMS then determines if the time information in the timestamp field in the receive record is within the threshold time value (810). If the timestamp information is within the threshold time value, the FMS compares the OAT and altitude values in the receive record with the OAT and altitude values measured by the aircraft (812). If the received and measured OAT and altitude values are substantially identical (e.g., they match), the aircraft sends a message to the network 212 including a transmit record (e.g., 402) with the bits in the status field set to "valid," and a time update command for the timestamp field in the transmit record (814).

However, if (808) the bits in the status field in the receive record are not set to "valid", or (810) the time value in the timestamp field in the receive record is not within the time threshold value, the aircraft sends a message to the network 212 including a transmit record (e.g., 402) with the aircraft's measured latitude, longitude, altitude and OAT values, and a current time value in the timestamp field (816).

### EXAMPLE EMBODIMENTS

Example 1 includes a method, comprising: requesting outside air temperature values and barometric correction values for at least two geographic, three-dimensional locations that are prospective waypoints for a vehicle; receiving an outside air temperature value and a barometric correction value for at least one geographic, three-dimensional location of the at least two geographic, three-dimensional locations; storing the received outside air temperature value and the received barometric correction value; measuring an outside air temperature value and a barometric correction value for each geographic, three-dimensional location of the at least two geographic, three-dimensional locations; and computing a flight path through the at least two geographic, three-dimensional locations utilizing the received outside air temperature value, the received barometric correction value, the measured outside air temperature value, and the measured barometric correction value.
Example 2 includes the method of Example 1, wherein the measuring comprises receiving forecasted data including the outside air temperature value and the barometric correction value, and the computing comprises computing the flight path utilizing the received outside air temperature value, the received barometric correction value, the forecasted outside air temperature value, and the forecasted barometric correction value.
Example 3 includes the method of any of Examples 1-2, further comprising: receiving a validation status corresponding to the received outside air temperature value and the received barometric correction value for the at least one geographic, three-dimensional location; and wherein the computing the flight path further comprises: computing the flight path utilizing the received outside air temperature value and the received barometric correction value if the corresponding validation status indicates that the received outside air temperature value and the received barometric correction value are valid; and computing the flight path utilizing a measured outside air temperature value and a measured barometric correction value corresponding to the received outside air temperature value and received barometric correction value if the corresponding validation status indicates that the received outside air temperature value and the received barometric correction value are invalid.
Example 4 includes the method of any of Examples 1-3, wherein the barometric corrected values are temperature-compensated altitude values.
Example 5 includes the method of any of Examples 1-4, wherein the vehicle is at least one of a fixed wing aircraft, a rotary wing aircraft, or an unmanned aerial vehicle (UAV) configured to follow one or more waypoints or a flight plan as the flight path.
Example 6 includes the method of any of Examples 1-5, wherein the at least one geographic three-dimensional location is a waypoint on the flight path, and the waypoint defines an altitude constraint.
Example 7 includes the method of any of Examples 1-6, wherein the receiving comprises the vehicle receiving a message from at least one of a communication network, a network of servers, or a second vehicle.
Example 8 includes the method of any of Examples 1-7, wherein the receiving comprises the vehicle receiving a message, and the message includes a receive record.
Example 9 includes the method of any of Examples 1-8, wherein the receiving comprises an aircraft receiving a message from a network of servers, and the message is responsive to a query record transmitted from the aircraft.
Example 10 includes a method, comprising: receiving a message including at least one outside air temperature value for a prospective geographic position of a vehicle, and an altitude value and a barometric corrected altitude value for a current geographic position of the vehicle; determining if the at least one outside air temperature value for the prospective geographic position of the vehicle is not equal to a current outside air temperature value for the prospective geographic position of the vehicle; and updating the at least one outside air temperature value for the prospective geographic position of the vehicle with the current outside air temperature value if the at least one outside air temperature value for the prospective geographic position of the vehicle is not equal to the current outside air temperature value at the prospective geographic position.
Example 11 includes the method of Example 10, further comprising: computing a temperature-compensated outside air temperature value for the prospective geographic position of the vehicle if the at least one outside air temperature value for the prospective geographic position of the vehicle is not equal to the current outside air temperature value at the prospective geographic position.
Example 12 includes the method of any of Examples 10-11, wherein the vehicle is an aircraft and the prospective geographic position of the aircraft comprises a latitude, longitude and altitude of a waypoint.
Example 13 includes the method of any of Examples 10-12, wherein the vehicle is an aircraft and the prospective geographic position of the aircraft includes an altitude constraint.
Example 14 includes the method of any of Examples 10-13, further comprising: determining if the barometric corrected altitude value received for the current geographic position of the vehicle is not equal to a current barometric corrected altitude value; indicating that the received barometric corrected altitude value is verified if the received barometric corrected altitude value for the current geographic position of the vehicle is equal to the current barometric corrected altitude value; and indicating that at least one of an altitude setting update and a barometric corrected altitude setting update are available to be performed if the barometric corrected altitude value received for the current geographic position of the vehicle is not equal to the current barometric corrected altitude value.
Example 15 includes the method of Example 14, further comprising: determining if at least one of the available altitude setting update and barometric corrected altitude setting update is performed; and updating the at least one altitude setting or barometric corrected altitude setting for the current geographic position of the vehicle with the received altitude setting or the barometric corrected altitude setting if the at least one of the available updates is performed.
Example 16 includes a system, comprising: a vehicle; an air data computer (ADC) onboard the vehicle, wherein the ADC is configured to receive an airspeed value and an altitude value from a sensor system onboard the vehicle, and generate a barometric corrected altitude value for the vehicle; a flight management system (FMS) onboard the vehicle, wherein the FMS is configured to receive the altitude value and the barometric corrected altitude value from the ADC, and generate a three-dimensional position value for the vehicle and at least two, three-dimensional position values that represent prospective waypoints for the vehicle; and a transmission module associated with the vehicle, wherein the transmission module is configured to receive the altitude value and the barometric corrected altitude value from the ADC, the three-dimensional position value for the vehicle and the at least two, three-dimensional position values that represent prospective waypoints for the vehicle from the FMS, and an outside air temperature value from a temperature sensing system onboard the vehicle, and transmit at least one message including the three-dimensional position value for the vehicle, the at least two, three-dimensional position values that represent prospective waypoints for the vehicle, the altitude value, the barometric corrected altitude value, and the outside air temperature value, and wherein the transmitted three-dimensional position value for the vehicle, at least two, three-dimensional position values that represent prospective waypoints for the vehicle, altitude value, barometric corrected altitude value, and outside air temperature value are utilized to adjust at least two flight parameters for a prospective flight plan for the vehicle.
Example 17 includes the system of Example 16, further comprising: a receive module associated with the vehicle and coupled to the ADC and the FMS, wherein the receive module is configured to receive at least a second message from the communication network, wherein the at least a second message includes a second three-dimensional position value, a second barometric corrected altitude value, and a second outside air temperature value for a second vehicle, and the second three-dimensional position value, the second barometric corrected altitude value, and the second outside air temperature value for the second vehicle are one or more flight parameters for a flight plan for the second vehicle, and utilized to adjust the at least two flight parameters for the prospective flight plan for the vehicle.
Example 18 includes the system of Example 17, wherein the at least one message includes a request for a plurality of three-dimensional positions for the vehicle at a corresponding plurality of prospective waypoints.
Example 19 includes the system of any of Examples 16-18, wherein the vehicle comprises an aircraft.
Example 20 includes the system of any of Examples 16-19, wherein the at least a second message includes an altitude setting value, a barometric corrected altitude setting value, and an outside air temperature vector value, and is utilized to adjust at least one of the at least two flight parameters for the prospective flight plan for the vehicle.

Notably, although the example embodiments described above can be implemented for vehicle approach and landing scenarios, the same concepts can also be implemented for vehicle takeoff and climbing scenarios. Furthermore, the enhanced accuracies of the predicted OAT and barometric corrected altitude information provided by the embodiments described above provide numerous benefits including, for example, enhanced air safety, enhanced control of cabin pressures at different altitudes, enhanced vehicle separation assurance, enhanced accuracy in estimating time of arrivals (ETAs), enhanced control of four-dimensional (e.g., latitude, longitude, altitude, time) minimum and maximum flight trajectory operations, enhanced fuel savings, enhanced crew awareness, and the like.

## Claims

1. A method, comprising:
requesting outside air temperature values and barometric correction values for at least two geographic, three-dimensional locations that are prospective waypoints for a vehicle;
receiving an outside air temperature value and a barometric correction value for at least one geographic, three-dimensional location of the at least two geographic, three-dimensional locations;
storing the received outside air temperature value and the received barometric correction value;
measuring an outside air temperature value and a barometric correction value for each geographic, three-dimensional location of the at least two geographic, three-dimensional locations; and
computing a flight path through the at least two geographic, three-dimensional locations utilizing the received outside air temperature value, the received barometric correction value, the measured outside air temperature value, and the measured barometric correction value.

2. The method of claim 1, wherein the measuring comprises receiving forecasted data including the outside air temperature value and the barometric correction value, and the computing comprises computing the flight path utilizing the received outside air temperature value, the received barometric correction value, the forecasted outside air temperature value, and the forecasted barometric correction value.

3. The method of claim 1, further comprising:
receiving a validation status corresponding to the received outside air temperature value and the received barometric correction value for the at least one geographic, three-dimensional location; and
wherein the computing the flight path further comprises:
computing the flight path utilizing the received outside air temperature value and the received barometric correction value if the corresponding validation status indicates that the received outside air temperature value and the received barometric correction value are valid; and
computing the flight path utilizing a measured outside air temperature value and a measured barometric correction value corresponding to the received outside air temperature value and received barometric correction value if the corresponding validation status indicates that the received outside air temperature value and the received barometric correction value are invalid.

4. The method of claim 1, wherein the barometric corrected values are temperature-compensated altitude values.

5. The method of claim 1, wherein the vehicle is at least one of a fixed wing aircraft, a rotary wing aircraft, or an unmanned aerial vehicle (UAV) configured to follow one or more waypoints or a flight plan as the flight path.

6. The method of claim 1, wherein the at least one geographic three-dimensional location is a waypoint on the flight path, and the waypoint defines an altitude constraint.

7. The method of claim 1, wherein the receiving comprises the vehicle receiving a message from at least one of a communication network, a network of servers, or a second vehicle.

8. The method of claim 1, wherein the receiving comprises the vehicle receiving a message, and the message includes a receive record.

9. The method of claim 1, wherein the receiving comprises an aircraft receiving a message from a network of servers, and the message is responsive to a query record transmitted from the aircraft.
